# EUROPEAN PATENT SPECIFICATION

(11) **EP 1 333 373 B1**
(45) Date of publication and mention of the grant of the patent: **09.03.2011**
(21) Application number: 02354020.6
(22) Date of filing: 30.01.2002
(51) Int. Cl.: G06F 3/14

(54) **Computer and base station**
Computer und Basisstation
Ordinateur et station de base

(43) Date of publication of application: 06.08.2003
(73) Proprietor: Hewlett-Packard Company, Palo Alto, CA 94304 (US)
(72) Inventor: Lecarpentier, François Xavier, 38360 Sassenage (FR)
(74) Representative: Lloyd, Richard Graham

(56) References cited:
- US-A- 5 831 639
- US-A- 6 157 935

## Description

This invention relates to a computer and a system comprising a computer and a base station where the computer and base station are operable to establish a wireless link and transmit graphical instructions over the wireless link.

### Background of the Invention

Portable or laptop computers are known where a single, relatively portable computer is integrally provided with a keyboard, a screen, data storage media, and other peripherals and device necessary to provide a mobile working capacity. To provide a suitably portable device, the weight and size must, of necessity, be limited, providing a relatively small screen, keyboard and storage capacity. It is often also desirable to provide such a portable computer with network access and to, for example, synchronise data on the computer with data held on other computers.

A way of overcoming these disadvantages is to provide a base station which is operable to communicate with a portable computer. The base station is operable to establish a link with the portable computer and, for example, enable a full sized keyboard and large screen to be used with the portable computer, and to provide network access.

Conventionally, the connection between the portable computer and the base station is by way of a mechanical plug and socket connection. The mechanical connection must be robust to withstand repeated plugging and unplugging of the portable computer. To overcome this disadvantage, it is know from US patent number US 5,864,708 to provide a wireless connection between the portable computer and the base station. In US 5,864,708, it is envisaged that the video signal may be transmitted from the portable computer to the base station and then to a visual display unit associated with the base station. A disadvantage of this technique is that a conventional video signal requires a substantial bandwidth, and the wireless connection between the base station and the portable computer may have a relatively low bandwidth which might be insufficient or at best substantially used by the video signal.

In International patent application number WO 00/31982, it is envisaged that a video signal is compressed using the MPEG format prior to transmission over a wireless link. This adds a computationally heavy compression stage following generation of the video signal. The MPEG compression protocol may also be inappropriate for some types of display, for example, displays with large areas of flat colour which is typical of many computer video outputs, and also for areas of fine detail such as fonts.

US 6157935 A discloses a wireless transceiver for coupling a portable computer to a remote large screen device. High level primitives of display data are transmitted using either infrared or radio wave from the computer to the remote large screen device.

US 5831639 A is concerned with the display of information stemming from a host on the display of a remote computer and vice versa. A graphics interface module in the operating system is responsible for generating a graphics display related to so-called function calls. A graphics driver interface is designed to isolate an application software or operating system from the display hardware by accepting generic function calls made by the application programs and reformatting the same as hardware-dependent calls suitable for the display hardware of the computer. The remote control programs bypass the isolating feature of the graphics driver interface by inserting a software layer between the graphics layer interface and the host display driver to trap function calls from the host to the host display driver. These function calls are transferred from the host to the remote computer. Computer graphics are generated on the screen of the remote computer on the basis of these function calls.

It is an object of the invention to provide a computer and a computer system operable to establish an effective wireless link where graphical instructions are transmitted.

This object is achieved by a computer in accordance with claim 1 and by a computer system in accordance with claim 9.

### Brief Description of the Drawings

An embodiment of the present invention will now be described by way of example only with reference to the accompanying drawings wherein;
Figure 1 is a diagrammatic illustration of a conventional method of generating a video output, and
Figure 2 is a diagrammatic illustration of a computer system embodying the present invention.

### Description of the Preferred Embodiment

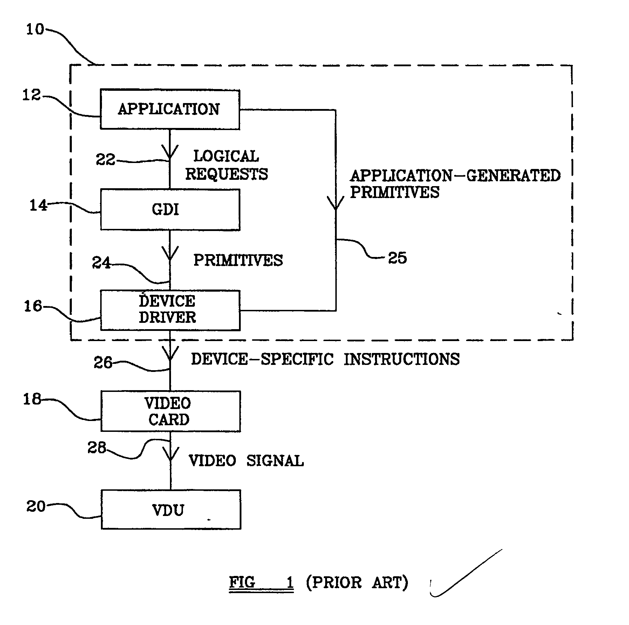

Referring now to Figure 1, an example of a conventional process by which a video image is generated and displayed is shown in abstract. In the present example, the steps shown are applicable to an application operating in a Windows (TM) operating system environment, but it will be apparent that the invention may be used in any other operating system environment as appropriate.

As shown in Figure 1, an operating system is shown diagrammatically at 10. Running under the operating system 10 are an application 12, a graphical device interface (GDI) 14 and a device driver 16. The device driver 16 is operable to control a video card 18, which in turn generates a video signal which is sent to a visual display unit (VDU) 20.

When the application 12 wishes to generate a display, it transmits a logical request 22 to the GDI 14 the logical request comprising a function name and related parameters. The GDI 14 provides a device independent layer between the application 12 and the device driver 16. The GDI 14 maintains a device context relating to device-specific instructions, such that the GDI 14 is operable to receive relatively high-level logical requests 22 from the application 12 for example to draw an ellipse, and generate primitives 24 in accordance with the logical requests 22, for example to draw a series of lines to form an ellipse if the ellipse drawing primitive is not supported by a lower graphical layer (for example in a hardware implementation). It is also known for an application 12 to bypass the GDI 14 and transmit application-generated primitives 25 to the device driver 16, such as DirectX primitives. The primitives 24, 25 are passed to the device driver 16, which generates device specific instructions 26 which are passed to the video card 18. The video card then generates an output video signal 28, which may for example be an analogue video signal, and passes it to the visual display unit 20 for display.

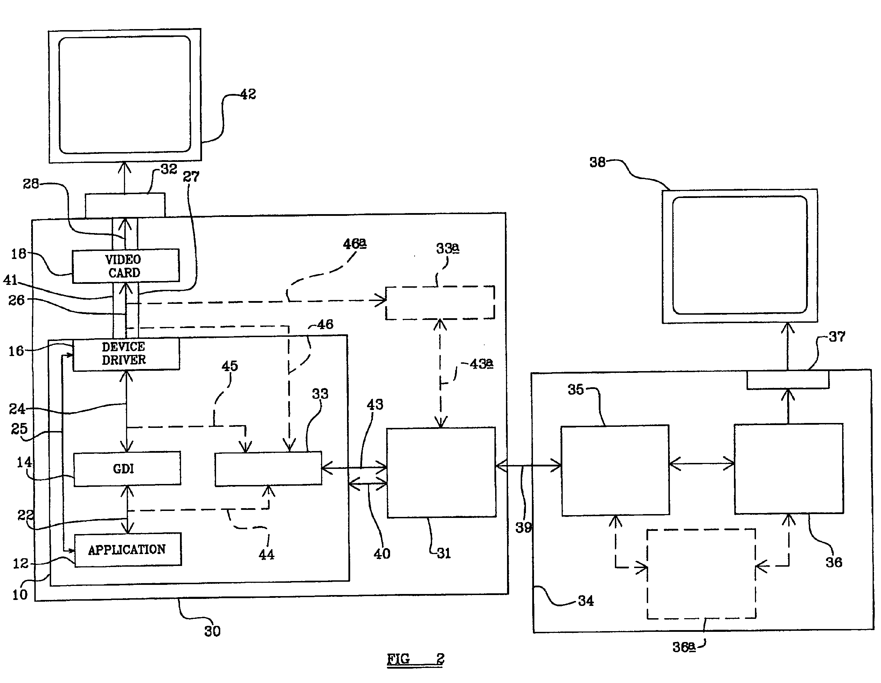

Referring now to Figure 2, a computer, in the present example a portable computer, is diagrammatically shown at 30. Where a feature is the same as that shown in Figure 1, the feature is referred to by the same reference numeral. The computer 30 is provided with a first transceiver module 31, a video output 32 and a graphical instruction module 33. A base station is shown at 34 provided with a second transceiver module 35, a video card 36 and a video output 37. A visual display unit 38 is shown connected to the video output 37.

When the computer 30 is within range of the base station 34 and is instructed to so, it is operable to establish a wireless link, illustrated at 39 between the first transceiver unit 31 of the computer 30 and the second transceiver unit 35 of the base station 34. The wireless link 39 may be a radio link, for example an Ethernet or other link as desired, or an infrared link, or any other appropriate link as desired.

In the present example, the computer 30 comprises a portable computer and the base station 34 comprises its own data storage medium network connection and other peripheral connections to enable the computer 30 to act as a conventional desk top personal computer when the wireless communication link 39 is activated. The computer 30 is operable to transmit data and instructions over the wireless link 39 in conventional manner as shown by the arrow 40.

In accordance with Figure 1, the computer 30 is provided with a graphical device interface 14 and a device driver 16 both running under the operating system 10. The computer 30 is provided with a video card 18 which receives device-specific instructions 26 from the device driver 16 via a bus 41, and generates a video signal 28 which is passed by the video output 32 to a visual display unit 42. The bus 41 may comprise a PCI bus, or any other bus as appropriate. As discussed in relation to Figure 1, when an application 12 running under the operating system 10 wishes to generate a video output, it transmits logical requests 22 to the GDI 14, which transmits primitives 24 to the device driver 16.

The graphical instruction module 33 is operable to trap graphical instructions and transmit them to the first transceiver module 31 as shown by arrow 43 for transmission over the wireless link 39 to the base station 34. On receipt of the graphical instructions, the transceiver 35 passes the instructions to the video card 36 which generates a video signal which is passed to the video output 37 and then to the visual display unit 38. In the present example, the graphical instruction module 33 comprises a software module running under the operating system 10, but it might be envisaged that the module 33 comprises, for example, a software module resident on the video card 18, or a stand alone element in hardware or firmware or the like.

The graphical instruction module 33 may be operable to trap graphical instructions at any appropriate point in the sequence as shown in Figure 1. For example as shown by arrow 44, the module 33 may be operable to trap the logical requests 22 generated by the application 12 and transmitted to the GDI 14. Conventionally, the operating system 10 provides a function or "hook" whereby a program can trap calls or logical requests 12 sent to the GDI by an application and override or prevent subsequent execution of the call or logical request. The graphical instruction module 33 in this example is operable to trap the logical requests 12 and transmit appropriate information, for example the logical request function name and associated parameters, to the transceiver module 31. In this case, the graphical instruction module 33 may be provided as part of the operating system 10, or as a part of the graphics device interface 14, or as a program running under the operating system 10.

As shown by arrow 45, the graphical instruction module 33 may alternatively trap the primitives 24 as transmitted by the GDI 14 to the device driver 16. Again, in this case, the graphics device module 33 may be provided as part of the operating system 10, or as part of the graphical device interface 14 such that it detects the output primitives 24 and transmits the primitives 24 to the first transceiver module 31, or indeed as part of the device driver 16 operable to transmit the received primitives 24 to the first transceiver module 31.

Advantageously, rather than trapping the primitives 24, the graphical instruction module 33 may provide a compatible device driver interface, such that the graphical instruction module 33 appears to the operating system 10 and GDI 14 to be a "local" driver. The graphical instruction module 33 may expose its capabilities in conventional manner, such that the operating system 10 perform the necessary steps to match the logical request 22 and primitives 24 to the exposed capabilities of the graphical device module 33 as for any other device driver. The capabilities may be encoded as part of the graphical instruction module 33, or may be transmitted by the base station 34 as part of a handshaking process as described below such that the graphical instruction module 33 dynamically receives the capabilities of the video card 36 and in effect emulates a device driver for that video card 36. The primitives 24, 25 will be passed to the graphical instruction module 33 as if it were a local device driver 16. The primitives 24, 25 will have been generated for a display having the exposed capabilities of the video card 36 and so no further translation should be necessary.

As a lower-level alternative, as shown by arrow 46 the graphical instruction module 33 may be operable to capture the device specific instructions 26 transmitted over the bus 41 to the video card 18. Again, the graphical instruction module 33 may be provided as part of the operating system 10, or as a part of the device driver 16 or indeed may be resident on the video card 18.

Further alternatively, as shown in dashed outline at 33a, the device driver 33 may be provided as a stand alone hardware or firmware module operable as shown by arrow 46 to monitor the bus 41, trap the device-specific instructions transmitted thereon and pass the instructions as shown by arrow 43a to the first transceiver module 31.

Where necessary, the base station 34 may be provided with an appropriate graphics manager 36a shown in dashed outline in order to handle the received graphical instructions and pass them to the video card 36.

The level of graphical instructions to be trapped by the graphical instruction module 33 and transmitted to the base station 34 may be linked to the capabilities of the base station 34. For example, where the logical requests 22 are trapped and transmitted, the base station 34 will require a graphics manager 36a operable to perform the functions of the GDI 14 and device driver 16 specific to the video card 36 to translate the logical requests 22 into appropriate device-specific instructions. Where the video card 36 is the same as the video card 18, or at least has a device driver which is the same as or accepts the same primitives as the device driver 16, the module 33 may trap the primitives 24 transmitted by the GDI 14 to the device driver 16. The graphics manager 36a need only act as a device driver. Similarly, where the video card 36 is the same as or accepts the same inputs as the video card 18, the graphics module 33 may transmit the device-specific instructions 26 from the device driver 16, and the instructions may be passed directly from the wireless transceiver 35 to the graphics card 36 without the need for an intermediate graphics manager 36a.

It may be envisaged that the graphical instruction module 33 is responsive to the capabilities of the docking station 34. For example, when the wireless link 39 is established a "handshaking" process may be performed wherein capability information relating to the capabilities of the graphics manager 36a and/or video card 36 are transmitted by the base station 34 to the computer 30 and passed to the graphical instruction module 33. The graphical instruction module 33 may then trap the logical request 22, primitives 24, 25 or device-specific instructions 26 and pass them to the first transceiver module 31 depending on the capabilities of the graphics manager 36a. Equally, it might be envisaged that the graphics manager 36a is able to detect or otherwise receives the capabilities of the module 33 such that it can identify whether the transmitted graphics instructions will comprise logical requests 22, primitives 24 or device-specific instructions 26 and process the graphical instructions accordingly. Where both the module 33 and graphics manager 36a are dynamically able to select and respond to an appropriate level of graphical instructions, it might be envisaged that a hand-shaking process occurs in which the module 33 and graphics instruction manager 36a select an appropriate level of graphical instructions to be transmitted and received depending on, for example, the bandwidth of the wireless link 39 or any other appropriate parameter.

There is thus a trade-off between the capability of the docking station 34 and the level of instructions trapped by the graphics instructions 33. Where the base station provided a high degree of functionality i.e. with a graphics manager 36a operable to act as the graphics device interface 14 and device driver 16, a relatively small number of high level logical requests may be transmitted across the wireless link 39. Alternatively, where the graphical instruction module 33 traps the device-specific instructions to the video card 18 and transmits them to a functionally identical video card 36, a relatively large number of low level instructions must be transmitted across the wireless link 39. Where the graphical instruction module 33 detects the primitives 24, 25, either by trapping primitives sent to the device driver 16 or by emulating a local device driver and receiving the primitives 24, 25, transmission of the primitives over the communication link will require a larger number of instructions to be transmitted than if high-level logical requests were to be sent, but equally a requires a smaller number of instructions compared to the number of low-level device-specific instructions which would be needed.

A mixture of relatively high- and low-level instructions may be transmitted over the wireless link 39. In the example where the application 12 generates primitives 25 and transmits them to the device driver 16, bypassing the GDI 14, the graphical instruction module 33 may be operable to trap both requests sent to the GDI 14 and the primitives 25. The graphical instruction module 33 is then able to optimise bandwidth use by transmitting the higher-level GDI logical requests where possible, while still transmitting the received primitives 25 where necessary.

To further improve the efficiency of the transmission of the graphic instructions over the wireless link 39, it might also be envisaged that the graphical instruction module 33 is operable to analyse the content of the visual display and transmit information accordingly. Three examples of display types are;
1) vector-based items, that is elements which can be described with geometrical primitives so as lines and circles, used to display window frames, fonts etc. To display such items, the logical requests 22 or primitives 24 could be transmitted directly.
2) static raster items, typically static images such as icons or pictures. In general, such items simply comprise bitmaps where each data element relates to a specific pixel. Bitmaps are generally generated for particular device capabilities, for example bit number, density, colour depth and bit alignment. Where a bitmap has been operated for the video card 18, some transformation may be required, either at the module 33 or graphical manager 36a, to transform the bitmap so that it is suitable for display on the VDU 38 using the video card 36. Advantageously, where the graphical instruction module 33 emulates a local driver as discussed herein before, the bitmap will have been generated for the exposed capabilities of the video card 36 and VDU 38 and so transformation will be necessary. The bitmap data may be appropriately compressed before transmission over the wireless link 39.
3) dynamic raster items, such as video films. Again, the information may be trapped at an appropriate level and compressed for transmission over the wire link 39. In the examples of compressed static raster items and dynamic raster items, it will be apparent that the docking station 34 will require a decompression program as part of the graphics manager 36a.

When the computer 30 comprises a portable computer with a visual display unit 42, it may be that the visual display unit 42 and the visual display unit 38 may not have the same capabilities. In such circumstances, the graphical instructions generated by one or more of the application 12, GDI 14 and device driver 16 may be adapted to address the video card 36 and visual display unit 38. Thus, during the establishment of the wireless link 39 between the transceiver 31 and the transceiver 35, the capabilities of the visual display unit 38, and video card 36 may be transmitted by the docking station 34, for example as part of a hand-shaking operation. The graphical instructions generated can then accordingly be adapted to the visual display unit 38.

Preferably, the adaptation of the graphical instructions is performed by the operating system 10, particularly where the graphical instruction module 33 emulates a local device driver as described herein. For example, the Windows (TM) operating system in recent versions can adapt graphical instructions when two or more video cards are present in a computer. Alternatively, it will be apparent that the graphics manager 36a may be operable to receive the graphical instructions via the wireless link 39 in a format suitable for the visual display unit 42, and adapt the graphical instruction such that they are suitable for transmission to the video card 36 and visual display unit 38.

Where the computer 30 comprises a portable computer, it will be apparent that it will be desirable that on establishment of the wireless link 39 the operating system 10 is operable to shut down the visual display unit 42 such that the graphical instructions are only transmitted to the base station 34 and visual display unit 38. When the wireless link 39 is broken, for example in the case of a portable computer indicating that the portable computer has moved away from the docking station, when the portable computer is activated, the graphical instructions may be processed as normal to provide a display on the visual display unit 42, and are not trapped by the graphical instruction module 33.

A system according to the present invention thus permits graphical instructions relating to a video output to be transmitted over a relatively low bandwidth communication link without resorting to the necessity of compressing the output video signal 28 from the video card, which can be computationally heavy and potentially lossy depending on the compression algorithm used. By transmitting relatively high level graphical instructions to the base station 34, the bandwidth required on the wireless link 39 to provide a display on the visual display unit 38 is reduced. Since information other than graphical instructions will be transmitted over the link 39, for example keyboard and mouse instructions, and network messages, it will clear that reducing the bandwidth used to transmit graphical information is desirable.

In the present specification "comprises" means "includes or consists of" and "comprising" means "including or consisting of'.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A computer (30) operable to communicate via a wireless connection with a base station,
the computer comprising a transceiver module (31) operable to transmit information over the wireless connection to the base station,
the computer being operable to generate graphical instructions to be passed to a graphical output control device (18) to generate a video signal in response to the graphical instructions,
the computer further comprising a graphical instruction module (33) operable to pass the graphical instructions to said transceiver module (31) for transmission to said base station,
a graphical device interface (14) layer, and a device driver (16),
**characterised in that** the graphical instruction module (33) is operable to emulate the device driver, and **in that**
the primitives are passed from the graphical device interface (14) layer or an application to the graphical instruction module (33),
wherein the graphical instruction module (33) is further operable to receive capability information from said base station and emulate said device driver in accordance with the capability information, and
wherein the graphical instruction module (33) is operable to trap one of high level logical requests or device-specific instructions or primitives as graphical instructions, depending upon the received capability information, and to transmit said graphical instructions to said base station.

2. A computer according to claim 1 wherein the computer comprises a bus (41) and wherein the graphical instruction module is operable to detect graphical instructions transmitted on the bus (41).

3. A computer according to any one of the preceding claims wherein the graphical instructions comprise logical requests transmitted to the graphical device interface layer from an application.

4. A computer according to claim 3 wherein the graphical instruction module (33) is provided as part of one of either an application (12), the graphical device interface layer (14) or an operating system (10) of the computer and is operable to capture the logical requests.

5. A computer according to claim 1 wherein the graphical instruction module (33) comprises part of one of the graphical device interface (14) layer, the device driver (16) and an operating system (10) of the computer and is operable to capture the primitives.

6. A computer according to any one claim 1 or claim 2 wherein the graphical output control device (16, 18) comprises a video card (18) and the computer comprises a device driver (16) wherein the graphical instructions comprise device-specific instructions transmitted from the device driver to the video card.

7. A computer according to claim 6 wherein the graphical instruction module (33) comprises part of one of the graphical output control device and the device driver is operable to transmit device-specific instructions transmitted by the device driver (16) and received by the graphical output control device (18).

8. A computer according to any one of the preceding claims comprising a visual display unit (42) operable to receive the video signal, the computer being operable to disable the visual display unit when a wireless connection is established with said base station.

9. A computer system comprising a computer according to any of the claims 1 to 8 and a base station (34) for communication with the computer via a wireless connection,
the base station (34) comprising a transceiver module (35) operable to receive information over the wireless connection from the computer, and
a graphical output control device (36, 36a) operable to generate a video signal to be transmitted to a visual display unit,
the graphical output control device (36, 36a) being operable to receive graphical instructions received from the computer received by the transceiver over a wireless link and generate a video output signal accordingly.

10. The computer system according to claim 9 wherein the graphical output control device (36, 36a) comprises a video card (36) and a graphics manager (36a) operable to receive the graphical instructions, generate device-specific instructions and pass the device-specific instructions to the video card.

11. The computer system according to claim 9 or claim 10, wherein the base station (34) is operable to transmit capability information to the computer over the wireless connection.

12. The computer system according to any one of claims 9 to 11 wherein the base station (34) comprises a visual display unit (38).

## Patentansprüche

1. Ein Computer (30), der wirksam ist, um über eine drahtlose Verbindung mit einer Basisstation zu kommunizieren,
wobei der Computer ein Sende-Empfangs-Modul (31) aufweist, das wirksam ist, um Informationen über die drahtlose Verbindung zu der Basisstation zu übertragen,
wobei der Computer wirksam ist, um graphische Anweisungen zu erzeugen, die zu einer Graphikausgangssteuerungsvorrichtung (18) weitergeleitet werden sollen, um ein Videosignal ansprechend auf die graphischen Anweisungen zu erzeugen,
wobei der Computer ferner ein Graphikanweisungsmodul (33) aufweist, das wirksam ist, um die graphischen Anweisungen zu dem Sende-Empfangs-Modul (31) zum Senden zu der Basisstation zu leiten,
eine Schicht einer Graphische-Vorrichtung-Schnittstellen (14) und ein Vorrichtungstreiber (16), **dadurch gekennzeichnet, dass**
das Graphikanweisungsmodul (33) wirksam ist, um den Vorrichtungstreiber zu emulieren, und dass die Grundelemente von der Schicht der Graphische-Vorrichtung-Schnittstelle oder einer Anwendung zu dem Grahpikanweisungsmodul (33) geleitet werden,
wobei das Graphikanweisungsmodul (33) ferner wirksam ist, um Fähigkeitsinformationen von der Basisstation zu empfangen und den Vorrichtungstreiber gemäß den Fähigkeitsinformationen zu emulieren, und
wobei das Graphikanweisungsmodul (33) wirksam ist, um eine der logischen Anforderungen auf hoher Ebene oder der vorrichtungsspezifischen Anweisungen oder Grundelemente als graphische Anweisungen zu sammeln, abhängig von den empfangenen Fähigkeitsinformationen, und die graphischen Anweisungen zu der Basisstation zu übertragen.

2. Ein Computer gemäß Anspruch 1, wobei der Computer einen Bus (41) aufweist und wobei das Graphikanweisungsmodul wirksam ist, um graphische Anweisungen zu erfassen, die auf dem Bus (41) übertragen werden.

3. Ein Computer gemäß einem der vorangehenden Ansprüche, bei dem die graphischen Anweisungen logische Anforderungen aufweisen, die zu der Schicht der Graphische-Vorrichtung-Schnittstelle von einer Anwendung übertragen werden.

4. Ein Computer gemäß Anspruch 3, bei dem das Graphikanweisungsmodul (33) als Teil von entweder einer Anwendung (12), der Schicht der Graphische-Vorrichtung-Schnittstelle (14) oder einem Betriebssystem (10) des Computers vorgesehen ist und wirksam ist, um die logischen Anforderungen zu erfassen.

5. Ein Computer gemäß Anspruch 1, bei dem das Graphikanweisungsmodul (33) einen Teil von entweder der Schicht der Graphische-Vorrichtung-Schnittstelle (14), dem Vorrichtungstreiber (16) oder einem Betriebssystem (10) des Computers aufweist und wirksam ist, um die Grundelemente zu erfassen.

6. Ein Computer gemäß einem der Ansprüche 1 oder 2, bei dem die Graphikausgangssteuerungsvorrichtung (16, 18) eine Videokarte (18) aufweist und der Computer einen Vorrichtungstreiber (16) aufweist, wobei die graphischen Anweisungen vorrichtungsspezifische Anweisungen aufweisen, die von dem Vorrichtungstreiber zu der Videokarte übertragen werden.

7. Ein Computer gemäß Anspruch 6, bei dem das Graphikanweisungsmodul (33) einen Teil von entweder der Graphikausgangssteuerungsvorrichtung aufweist und der Vorrichtungstreiber wirksam ist, vorrichtungsspezifische Anweisungen zu übertragen, die durch den Vorrichtungstreiber (16) übertragen werden und durch die Graphikausgangssteuerungsvorrichtung (18) empfangen werden.

8. Ein Computer gemäß einem der vorangehenden Ansprüche, der eine visuelle Anzeigeeinheit (42) aufweist, die wirksam ist, um das Videosignal zu empfangen, wobei der Computer wirksam ist, um die visuelle Anzeigeeinheit zu deaktivieren, wenn eine drahtlose Verbindung mit der Basisstation eingerichtet ist.

9. Ein Computersystem, das einen Computer gemäß einem der Ansprüche 1 bis 8 und eine Basisstation (34) für eine Kommunikation mit dem Computer über eine drahtlose Verbindung aufweist,
wobei die Basisstation (34) ein Sende-Empfangs-Modul (35) aufweist, das wirksam ist, um Informationen über die drahtlose Verbindung von dem Computer zu empfangen, und
eine Graphikausgangssteuerungsvorrichtung (36, 36a), die wirksam ist, um ein Videosignal zu erzeugen, das zu einer visuellen Anzeigeeinheit übertragen werden soll,
wobei die Graphikausgangssteuerungsvorrichtung (36, 36a) wirksam ist, um graphische Anweisungen zu empfangen, die von dem Computer empfangen werden, durch das Sende-Empfangs-Gerät über eine drahtlose Verbindung empfangen werden, und um entsprechend ein Videoausgangssignal zu erzeugen.

10. Das Computersystem gemäß Anspruch 9, bei dem die Graphikausgangssteuerungsvorrichtung (36, 36a) eine Videokarte (36) und einen Graphikverwalter (36a) aufweist, der wirksam ist, um die graphischen Anweisungen zu empfangen, vorrichtungsspezifische Anweisungen zu erzeugen und die vorrichtungsspezifischen Anweisungen zu der Videokarte weiterzuleiten.

11. Das Computersystem gemäß Anspruch 9 oder Anspruch 10, bei dem die Basisstation (34) wirksam ist, um Fähigkeitsinformationen zu dem Computer über die drahtlose Verbindung zu übertragen.

12. Das Computersystem gemäß einem der Ansprüche 9 bis 11, bei dem die Basisstation (34) eine visuelle Anzeigeeinheit (38) aufweist.

## Revendications

1. Ordinateur (30) pouvant fonctionner pour communiquer avec une station de base par une connexion sans fil,
l'ordinateur comprenant un module émetteur-récepteur (31) pouvant fonctionner pour transmettre des informations à la station de base, via la connexion sans fil,
l'ordinateur pouvant fonctionner pour générer des instructions graphiques à passer à un dispositif de commande de sortie graphique (18), pour générer un signal vidéo en réponse aux instructions graphiques,
l'ordinateur comprenant par ailleurs un module d'instructions graphiques (33) pouvant fonctionner pour passer les instructions graphiques audit module émetteur-récepteur (31), pour transmission à ladite station de base,
une couche interface de dispositif graphique (14) et une commande de dispositif (16),
**caractérisé par le fait que** le module d'instructions graphiques (33) peut fonctionner pour émuler la commande de dispositif et que les primitives sont passées de la couche interface de dispositif graphique (14) ou d'une application au module d'instructions graphiques (33),
dans lequel le module d'instructions graphiques (33) peut par ailleurs fonctionner pour recevoir des informations de capacité de ladite station de base et pour émuler ladite commande de dispositif en fonction des informations de capacité, et
dans lequel le module d'instructions graphiques (33) peut fonctionner pour attraper l'une des demandes logiques de haut niveau ou des instructions spécifiques au dispositif ou des primitives comme instructions graphiques, en fonction des informations de capacité reçues, et pour transmettre lesdites instructions graphiques à ladite station de base.

2. Ordinateur selon la revendication 1, dans lequel l'ordinateur comprend un bus (41) et dans lequel le module d'instructions graphiques peut fonctionner pour détecter les instructions graphiques transmises au bus (41).

3. Ordinateur selon l'une quelconque des revendications précédentes, dans lequel les instructions graphiques comprennent les demandes logiques transmises à la couche interface de dispositif graphique à partir d'une application.

4. Ordinateur selon la revendication 3, dans lequel le module d'instructions graphiques (33) est prévu comme faisant partie de l'un parmi soit une application (12), la couche interface de dispositif graphique (14), soit d'un système d'exploitation (10) de l'ordinateur, et peut fonctionner pour saisir les demandes logiques.

5. Ordinateur selon la revendication 1, dans lequel le module d'instructions graphiques (33) comprend une partie de l'un parmi la couche interface de dispositif graphique (14), la commande du dispositif (16) et un système d'exploitation (10) de l'ordinateur, et peut fonctionner pour saisir les primitives.

6. Ordinateur selon la revendication 1 ou la revendication 2, dans lequel le dispositif de commande de sortie graphique (16, 18) comprend une carte vidéo (18) et l'ordinateur comprend une commande du dispositif (16), dans lequel les instructions graphiques comprennent les instructions spécifiques au dispositif transmises de la commande de dispositif à la carte vidéo.

7. Ordinateur selon la revendication 6, dans lequel le module d'instructions graphiques (33) comprend une partie de l'un parmi le dispositif de commande de sortie graphique, et la commande du dispositif peut fonctionner pour transmettre les instructions spécifiques au dispositif transmises par la commande du dispositif (16) et reçues par le dispositif de commande de sortie graphique (18).

8. Ordinateur selon l'une quelconque des revendications précédentes, comprenant une unité d'affichage visuel (42) pouvant fonctionner pour recevoir le signal vidéo, l'ordinateur pouvant fonctionner pour désactiver unité d'affichage visuel lorsqu'il est établi une connexion sans fil avec ladite station de base.

9. Système d'ordinateur comprenant un ordinateur selon l'une quelconque des revendications 1 à 8 et une station de base (34) destinée à communiquer avec l'ordinateur via une connexion sans fil,
la station base (34) comprenant un module d'émetteur-récepteur (35) pouvant fonctionner pour recevoir des informations de l'ordinateur via la connexion sans fil, et
un dispositif de commande de sortie graphique (36, 36a) pouvant fonctionner pour générer un signal vidéo à transmettre à une unité d'affichage visuel,
le dispositif de commande de sortie graphique (36, 36a) pouvant fonctionner pour recevoir les instructions graphiques reçues de l'ordinateur reçues par l'émetteur-récepteur via une liaison sans fil et pour générer un signal de sortie vidéo en conséquence.

10. Système d'ordinateur selon la revendication 9, dans lequel le dispositif de commande de sortie graphique (36, 36a) comprend une carte vidéo (36) et un gestionnaire de graphiques (36a) pouvant fonctionner pour recevoir les instructions graphiques, générer des instructions spécifiques au dispositif et passer les instructions spécifiques au dispositif à la carte vidéo.

11. Système d'ordinateur selon la revendication 9 ou la revendication 10, dans lequel la station de base (34) peut fonctionner pour transmettre par connexion sans fil les informations de capacité à l'ordinateur.

12. Système d'ordinateur selon l'une quelconque des revendications 9 à 11, dans lequel la station de base (34) comprend une unité d'affichage visuel (38).
